# EUROPEAN PATENT SPECIFICATION

(11) **EP 2 127 812 B1**
(45) Date of publication and mention of the grant of the patent: **07.03.2018**
(21) Application number: 08703974.9
(22) Date of filing: 28.01.2008
(51) Int. Cl.: B25B 23/14, B25B 21/00, G01L 5/24, G01L 3/14, B25B 23/147

(54) **DEVICE FOR DETECTING LOAD TORQUE ON ELECTRIC MOTOR**
VORRICHTUNG ZUR DETEKTION EINES LASTMOMENTES AN EINEM ELEKTROMOTOR
PROCÉDÉ DE DÉTECTION D'UN COUPLE DE CHARGE SUR UN MOTEUR ÉLECTRIQUE

(30) Priority: 29.01.2007 JP 2007017482
(43) Date of publication of application: 02.12.2009
(73) Proprietor: Totsu, Katsuyuki, Tokyo 131-0045 (JP)
(72) Inventor: Totsu, Katsuyuki, Tokyo 131-0045 (JP)
(74) Representative: Hoffmann Eitle
(86) International application number: PCT/JP2008/051165
(87) International publication number: WO 2008/093625

(56) References cited:
- EP-A2- 1 112 819
- GB-A- 1 568 952
- JP-A- 09 029 654
- JP-A- 56 094 234
- JP-A- 56 157 966
- JP-A- 62 063 029
- JP-U- 06 061 465
- JP-U- 62 047 936
- US-A- 4 055 080

## Description

### Technical Field

The present invention relates to a device for detecting load torque on an electric motor, adapted for use in an electric rotary tool and the like for rotating a rotary tool such as a driver bit using the electric motor, wherein the device can appropriately detect screw tightening torque that becomes load torque on the electric motor during a screw tightening work by a driver bit, for example, and a support structure of the motor can be stably placed.

### Background Art

Conventionally, in a tightening work of bolts or nuts, a constant-torque tightening device configured so as to rotate a DC motor at low torque and at a high speed until immediately before tightening, rotate the DC motor at high torque and at a low speed at a time from immediately before tightening to the moment of tightening, and stop the motor rotating at high torque and at a low speed when a set value of torque and the output of a strain gauge are coincided, has been proposed (refer to JP 53-003840 B).

The constant-torque tightening device described in JP 53-003840 B is disclosed such that a strain gauge is provided at the outer periphery of a bearing member which fixes and supports the lower portion of the DC motor at one end thereof and fixes the other end thereof to a case, the upper portion of said DC motor is supported to the case by a tool supporting bearing, and thereby, during tightening of a bolt, a twisting moment is imparted to said bearing member to cause a change in internal resistance of the strain gauge depending on the degree of the moment the change being picked up as an electric signal and detected as a torque value.

On the contrary, the present inventor has developed a torque detector capable of measuring dynamic torque accurately as fluctuation of continuous torque values without torque loss, while performing a work such as screw tightening, throughout the entire process of the work, and has been granted a patent (refer to JP 62-025980 B).

The torque detector described in JP 62-025980 B includes a screw tightening power unit that connects a motor and a speed reducer with each other and derives an output shaft from said speed reducer, and has a configuration in which one end of said power unit is fixed within a casing via a bearing supporting said output shaft, the other end thereof is fixed within the casing via a support composed of a flat plate extending coaxially with this, and a strain gauge is attached to one side surface of said plate. That is, in the torque detector, the power unit composed of said motor and speed reducer is hung in the casing by the support to which a strain gauge is attached and the bearing.

Moreover, as an improved version of a conventional screw tightener, a long-life screw tightener having few wear of clutch disc, has been proposed, in which a first motor generating high torque and a second motor achieving high speed rotation are serially arranged so that their rotating shafts become in the same axis, and an electromagnetic clutch is placed between them, which is configured so as to be connected to them after their driving shafts stop to rotate perfectly, at the time of moving from high speed rotation screw-in to low speed rotation tightening (refer to JP 10-329051 A).

The screw tightener described in JP 10-329051 A has a configuration in which a torque sensor is provided between the rotating shaft and a driver bit of said second motor, and the screw tightener, when tightening a screw, calculates a torque value based on the signal of the torque sensor using a time at which said clutch enters a connection state as a starting point, and stops said first motor to complete screw tightening when the value becomes a predetermined value. In addition, a configuration of said torque sensor is disclosed, which fixes a dual structure strain tube to the housing of said second motor, attaches a strain gauge to the outer wall of the inner tube of the strain tube, and connects the lower portion of said strain tube to a holding section.

In the above-described constant-torque tightening device proposed in JP 53-003840 B, the upper portion of the device is fixed to a casing of a motor pivotally supported to a holding section case, and the lower portion of the device is fixed to the holding section case via a cylindrical support placed so as to surround a driving shaft connected to the motor, and when a reaction force imparted to a driver bit during screw tightening is transmitted to the casing of the motor via said driving shaft, it is detected as a torque value of screw tightening by a strain gauge provided to the support connected between the device and the holding section case.

However, when a screw tightening torque value is detected by the constant-torque tightening device having said configuration, since the support to which the strain gauge is attached, is placed so as to be absolutely imparted with all loads including the load of the motor, it is difficult to appropriately and highly accurately detect a twisting moment acting as a reaction force imparted to a driver bit during screw tightening. Moreover, it is necessary to support a motor and the like in a turnable and displaceable manner with respect to the holding section case, resulting in difficulties in that assembling work during manufacturing becomes complicated, and a support structure of the motor and the like is placed unstably.

Moreover, since the above-mentioned torque detector described in JP 62-025980 B, has a configuration which fixes the other end of the power unit within the holding section casing via the support composed of a flat plate extending coaxially with the power unit, it is necessary for a configuration for appropriately and highly accurately detecting the reaction force imparted to a driver bit during screw tightening, that is screw tightening torque, to support the power unit composed of an electric motor to the holding section casing in a turnable and displaceable manner. Thus, there are difficulties in that assembling work during manufacturing becomes complicated, and a support structure of the power unit is placed unstably.

Further, in the above-mentioned screw tightener described in JP 10-329051 A, since, similar to the constant-torque tightening device described in JP 53-003840 B, the strain tube to which a strain gauge is attached, is placed so as to be absolutely imparted with all loads including the load of the motor, it is not placed in a satisfactory configuration for appropriately and highly accurately detecting screw tightening torque. Moreover, it is necessary to support a plurality of coaxially and serially arranged motors in a turnable and displaceable manner with respect to the holding section, resulting in difficulties in that assembling work during manufacturing becomes complicated, and each support structure of these motors is unstably placed.

US 4 055 080 A discloses a torquing apparatus, but fails to disclose the features in the characterizing portion of Claim 1 below. Further prior art is known from JP 09-029654 A; JP 56-094234 A; and JP 56-157966 A.

### Summary of the Invention

According to the present invention, there is provided a device for detecting load torque on an electric motor, including a sleeve body surrounding a drive output shaft of the electric motor, the drive output shaft projected from one end of a motor housing of the electric motor, wherein said device has an integrated structure in which a flange is formed at one end of the sleeve body and the other end of said sleeve body is formed as an internal gear section of a reduction mechanism having planetary gears, wherein a strain gauge is arranged to be attached to the outer periphery of said sleeve body, and wherein the drive output shaft of said electric motor is configured to mesh with the planetary gears of the reduction mechanism including said internal gear section so that rotary driving force is transmitted to an output shaft, the reduction mechanism composed of the planetary gears being connected to said output shaft, the device configured such that load torque acting on the drive output shaft of the electric motor via said output shaft and said reduction mechanism acts as a twisting moment on the sleeve body constituting the internal gear section of said reduction mechanism and can be detected by the strain gauge, characterized in that the device is configured such that the flange is fixed to the one end of said motor housing.

The present inventor, after energetic studies and trial productions, found that by providing a device including a sleeve body provided at a drive output shaft projected from one end of a motor housing of the electric motor so as to surround the drive output shaft, and having an integrated structure in which a flange is formed at one end of the sleeve body and is fixed to one end of said motor housing, and the other end of said sleeve body is formed as an internal gear section of a reduction mechanism having planetary gears; and a structure in which a pair of strain gauges is attached to the outer periphery of said sleeve body, it is possible to appropriately and highly accurately detect load torque which is opposite torque acting on the drive output shaft of the motor, by the strain gauge attached to said sleeve body, with respect to load suitably connected to the output shaft of said reduction mechanism, and also possible to fix said electric motor to an external casing, which is a specific holding section or a stationary section, thereby enabling to facilitate production of the device, and to place a support structure stably.

The device for detecting load torque on an electric motor having such a configuration, can be applied suitably to, for example, a device for detecting screw tightening torque on an electric screw-driver. That is, in this case, by a configuration in which an electric motor is fixed within a casing of a holding section as an electric screw-driver, and a driver bit is suitably connected from the drive output shaft of the electric motor via the output shaft of the reduction mechanism, the inventor found that it is possible to appropriately and highly accurately detect reaction force acting on a driver bit by a strain gauge at the moment of final tightening during screw tightening work, that is screw tightening torque, via said sleeve body, and by fixing the electric motor within the casing of the holding section, it is possible to facilitate production of the device, and to place a support structure stably.

Accordingly, embodiments of the present invention are able to provide a device for detecting load torque on an electric motor, adapted for a device for rotating a predetermined load by the motor, which can appropriately and highly accurately detect reaction force of a load acting on the drive output shaft of the motor, that is load torque, and by fixing the motor to an external casing, which is a specific holding section and a stationary section, facilitate production of the device, and place a support structure stably.

Moreover, embodiments of the present invention are able to provide a device for detecting screw tightening torque on an electric screw-driver, adapted for use for an electric screw-driver configured to drive a driver bit by an electric motor, and can be configured so that the electric motor is stably fixed within a holding section casing, tightening torque during a screw tightening work can be detected appropriately and highly accurately, production of the device can be facilitated, and a support structure can be placed stably.

### Effect of the Invention

With embodiments of the device for detecting load torque on an electric motor, according to the present invention, adapted for a device for rotating a predetermined load by the motor via a reduction mechanism having planetary gears, by causing reaction force of such a load, or load torque, acting on the drive output shaft of the motor with the electric motor being fixed, to act effectively as a twisting moment by a sleeve body surrounding said drive output shaft, it is possible to detect the moment appropriately and highly accurately by a strain gauge.

With further embodiments of the device for detecting load torque according to the present invention, by fixing the electric motor to an external casing, which is a specific holding section or a stationary section, it is possible to facilitate production of the device, and to place a support structure stably.

With still further embodiments, of a device for detecting screw tightening torque on an electric screw-driver according to the present invention, which is an application of said device for detecting load torque on an electric motor, adapted for an electric screw-driver for tightening a screw work by transmitting rotational drive from the electric motor to a driver bit via a reduction mechanism having planetary gears, by causing screw tightening torque which is reaction force acting on the drive output shaft of the motor with the electric motor being fixed, to effectively act as a twisting moment by a sleeve body surrounding said drive output shaft, it is possible to detect the moment appropriately and highly accurately by a strain gauge, and by fixing the electric motor within the holding section casing, it is possible to facilitate production of the device, and to place a support structure stably.

According to further embodiments of the device for detecting screw tightening torque on an electric screw-driver according to the present invention, by actuating a clutch mechanism or a torque limiter, when screw tightening torque by a driver bit becomes a predetermined torque value, and by smoothly stopping the electric motor by shutting down of a power source, or the like, it is possible to achieve an affective screw tightening work.

### Brief Description of the Drawings

To enable a better understanding of the present invention, and to show how the same may be carried into effect, reference will now be made, by way of example only, to the accompanying drawings, in which:-
Fig. 1 is an explanatory diagram of a schematic configuration illustrating one example of a device for detecting load torque on an electric motor according to the present invention; and
Fig. 2 is an explanatory diagram of a schematic configuration illustrating a case in which the device for detecting load torque on an electric motor according to the present invention is applied to a device for detecting screw tightening torque on an electric screw-driver.

### Detailed Description

Next, with reference to drawings, examples of the device for detecting load torque on an electric motor according to the present invention, will be described in detail below.

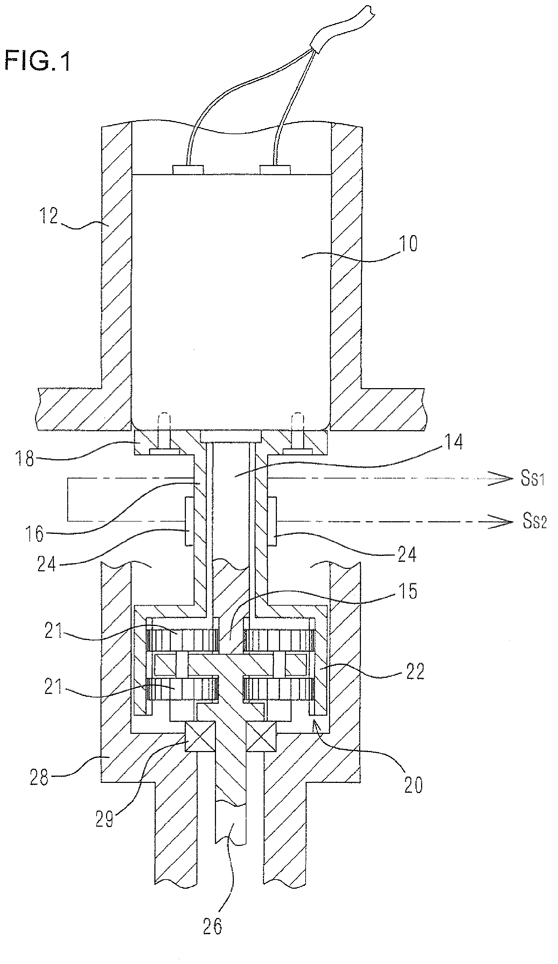

Fig. 1 is an explanatory diagram of a schematic configuration illustrating one example of a device for detecting load torque on an electric motor according to the present invention. That is, in Fig. 1, an electric motor is indicated by reference numeral 10, and a motor housing of the electric motor 10 is fixed to an external casing 12 formed as a required stationary section.

Thus, with respect to a rotary drive output shaft 14 projected from one end of a motor housing of said electric motor 10, a sleeve body 16 is placed so as to surround the rotary drive output shaft 14. A flange 18 is formed at one end of the sleeve body 16, and the flange is fixed to the one end of the motor housing of said electric motor 10. The other end of said sleeve body 16 is integrally formed as an internal gear section 22 of a reduction mechanism 20 having planetary gears 21. A strain gauge 24 is suitably attached to the outer periphery of said sleeve body 16.

Furthermore, in the example illustrated in Fig. 1, the rotary drive output shaft 14 of said electric motor 10 meshes with the planetary gears 21 of the reduction mechanism 20 including said internal gear section 22 so that the rotary driving force is transmitted to an output shaft 26 rotatably and integrally supporting said planetary gears 21. The output shaft 26 is suitably connected to loading means for being rotated and driven by the electric motor 10. In addition, in Fig. 1, a housing surrounding and holding said reduction mechanism 20 is indicated by reference numeral 28, and it supports rotatably the reduction mechanism 20 composed of the planetary gears 21 connected to said output shaft 26.

According to the device for detecting load torque on an electric motor of the present example having such a configuration, when required loading means is rotated and driven via the output shaft 26 of the reduction mechanism 20 by the drive of the electric motor 10, load torque in said loading means, that is reaction force acting on the rotary drive output shaft 14 of the electric motor 10 via said output shaft 26 and said reduction mechanism 20, acts effectively as a twisting moment on the sleeve body 16 constituting the internal gear section 22 of said reduction mechanism 20, and the state can be detected by the strain gauge 24 appropriately and highly accurately. Thus, signals Ss1 and Ss2 detected by said strain gauge 24 can be suitably input into a load torque detection circuit to be converted and displayed as load torque.

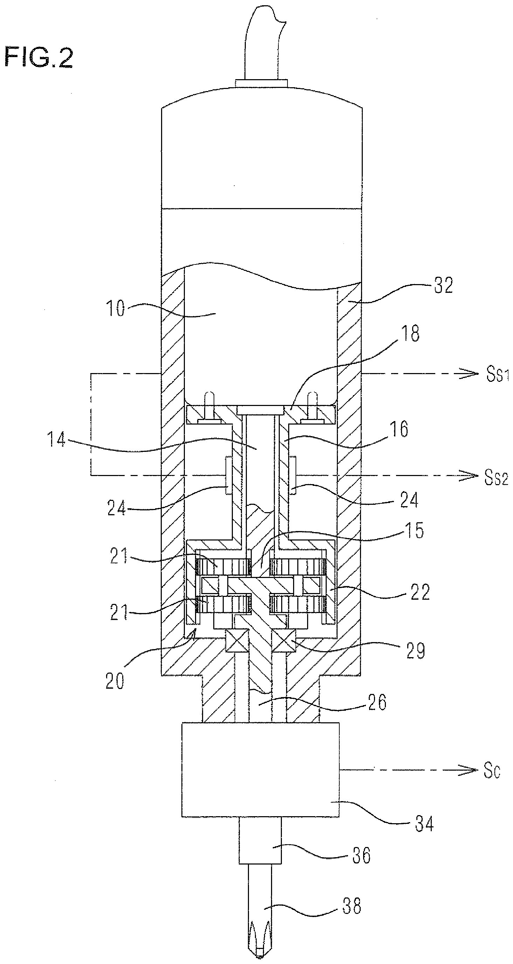

Fig. 2 illustrates an example of a device for detecting screw tightening torque on an electric screw-driver, which is an application of the device for detecting load torque on an electric motor, having the above-mentioned configuration. In addition, for simplicity of description, the same constituents as those of the example illustrated in Fig. 1 are indicated by the same reference numerals as those of the example in Fig. 1 and detailed description thereof will be eliminated.

In Fig. 2, the device for detecting screw tightening torque on an electric screw-driver according to the present example, has a configuration in which an electric motor 10 is fixed and held within the holding section casing 32; with respect to the rotary drive output shaft 14 projected from one end of a motor housing of the electric motor 10, the sleeve body 16 having said configuration is placed so as to surround the rotary drive output shaft 14; and a driver bit 38 is connected to the output shaft 26 of said reduction mechanism 20 via a clutch mechanism 34 and a bit holder 36 like those provided to a conventional electric screw-driver.

As for a configuration of said clutch mechanism 34, for example, it may be configured so that a clutch disc is attached to the output shaft 26 of said reduction mechanism 20, a clutch ball is elastically engaged to the clutch disc in an axial direction, and if, in a screw tightening work, certain amount or more of load torque (reaction force) is imparted on the output shaft 26 via the driver bit 38, said clutch disc surmounts the clutch ball and the rotary drive force with respect to the bit holder 36 connected to the driver bit 38 is prevented from being transmitted, thereby, enabling to tighten a screw at predetermined torque.

In this case, said clutch mechanism 34 may be configured so that the state in which said clutch disc surmounts the clutch ball is detected by a detection element, and the element outputs a required clutch operation signal Sc so as to shut down the power source of the electric motor. In addition, instead of the clutch mechanism 34 having said configuration, it is also possible to provide a torque limiter. Further, it is also possible to eliminate the clutch mechanism 34 and the torque limiter, and in this case, the output shaft 26 of said reduction mechanism 20 is configured so as to be connected to the driver bit 38 directly via the bit holder 36.

Next, operation of detecting torque when a screw tightening work is performed using an electric screw-driver having said configuration, will be described.

In the electric screw-driver according to the present example, by energizing the electric motor 10, its rotary drive output shaft 14 is rotated and driven in a normal direction, and by meshing a pinion 15 with the planetary gears 21, rotary driving force is transmitted to the output shaft 26 via the reduction mechanism 20. Further, the rotary driving force of said output shaft 26 is transmitted to the driver bit 38 via said clutch mechanism 34 and the bit holder 36, enabling to perform a screw tightening work.

In such a screw tightening work, screw tightening torque as reaction force acting from said driver bit 38 on the rotary drive output shaft 14 of the electric motor 10 via the bit holder 36, the clutch mechanism 34, the output shaft 26, and the reduction mechanism 20, acts effectively as a twisting moment on said clutch mechanism 34 and the sleeve body 16 constituting the internal gear section 22 of said reduction mechanism 20, and the state can be detected by the strain gauge 24 appropriately and highly accurately. Thus, signals Ss1 and Ss2 detected by said strain gauge 24 can be suitably input into a screw tightening torque detection circuit to be converted and displayed as screw tightening torque.

As mentioned-above, preferred examples of the present invention have been described, however, the present invention is not limited to the above-mentioned examples, it can also be applied to, for example, apparatuses and devices in which the sleeve body is used as a load constituting member of various electric motors other than an electric screw-driver, within the scope of the appended claims.

## Claims

1. A device for detecting load torque on an electric motor, including a sleeve body (16) surrounding a drive output shaft (14) of the electric motor (10), the drive output shaft (14) projecting from one end of a motor housing of the electric motor (10), wherein said device has an integrated structure in which a flange (18) is formed at one end of the sleeve body and the other end of said sleeve body is formed as an internal gear section (22) of a reduction mechanism (20) having planetary gears (21), wherein a strain gauge (24) is arranged to be attached to the outer periphery of said sleeve body, and wherein the drive output shaft (14) of said electric motor (10) is configured to mesh with the planetary gears (21) of the reduction mechanism (20) including said internal gear section (22) so that rotary driving force is transmitted to an output shaft (26), the reduction mechanism (20) composed of the planetary gears (21) being connected to said output shaft (26), the device is configured such that load torque acting on the drive output shaft (14) of the electric motor (10) via said output shaft (26) and said reduction mechanism (20) acts as a twisting moment on the sleeve body (16) constituting the internal gear section (22) of said reduction mechanism (20) and can be detected by the strain gauge (24), **characterized in that** the device is configured such that the flange (18) is fixed to the one end of said motor housing.

2. The device for detecting load torque on an electric motor, according to claim 1, **characterized in that** said electric motor is fixed to an external casing (12), which is a specific holding section or a stationary section.

3. A device for detecting screw tightening torque on an electric screw-driver, comprising a device for detecting load torque on an electric motor according to Claim 1, **characterized in that** a driver bit (38) is connected to the output shaft (26) of said reduction mechanism (20), and said electric motor (10) is fixed and placed within a holding section casing (32) of the electric screw-driver, so as to detect by the strain gauge attached to said sleeve body screw tightening torque in a screw tightening work.

4. The device for detecting screw tightening torque on an electric screw-driver, according to claim 3, **characterized in that** the driver bit is connected to the output shaft (26) of said reduction mechanism (20) via a clutch mechanism (34) or a torque limiter.

## Patentansprüche

1. Vorrichtung zum Detektieren des Lastmoments auf einem Elektromotor, die einen Muffenkörper (16) enthält, der eine Antriebsausgabewelle (14) des Elektromotors (10) umgibt, wobei die Antriebsausgabewelle (14) aus einem Ende eines Motorgehäuses des Elektromotors (10) herausragt, wobei die Vorrichtung eine integrierte Struktur aufweist, wobei ein Flansch (18) an einem Ende des Muffenkörpers ausgebildet ist und das andere Ende des Muffenkörpers als innenliegender Zahnradabschnitt (22) eines Reduktionsmechanismus (20) ausgebildet ist, der Planetenzahnrädern (21) aufweist, wobei ein Dehnmessstreifen (24) angeordnet ist, am Außenumfangsrand des Muffenkörpers befestigt zu sein, und wobei die Antriebsausgabewelle (14) des Elektromotors (10) konfiguriert ist, die Planetenzahnräder (21) des Reduktionsmechanismus (20), der den innenliegenden Zahnradabschnitt (22) enthält, in Eingriff zu nehmen, sodass eine Drehantriebskraft auf eine Ausgabewelle (26) übertragen wird, wobei der Reduktionsmechanismus (20), der aus den Planetenzahnrädern (21) zusammengesetzt ist, mit der Ausgabewelle (26) verbunden ist, die Vorrichtung so konfiguriert ist, dass ein Lastmoment, das über die Ausgabewelle (26) und den Reduktionsmechanismus (20) auf die Antriebsausgabewelle (14) des Elektromotors (10) wirkt, als Verdrehmoment auf den Muffenkörper (16) wirkt, der den innenliegenden Zahnradabschnitt (22) des Reduktionsmechanismus (20) bildet, und durch den Drehmessstreifen (24) detektiert werden kann, **dadurch gekennzeichnet, dass** die Vorrichtung so konfiguriert ist, dass der Flansch (18) an dem einen Ende des Motorgehäuses fixiert ist.

2. Vorrichtung zum Detektieren eines Lastmoments auf einem Elektromotor nach Anspruch 1, **dadurch gekennzeichnet, dass** der Elektromotor an einer außenliegenden Ummantelung (12) fixiert ist, die ein spezifischer Halteabschnitt oder ein stationärer Abschnitt ist.

3. Vorrichtung zum Detektieren eines Schraubenanzugsmoments auf einem elektrischen Schraubendreher, umfassend eine Vorrichtung zum Detektieren eines Lastmoments auf einem Elektromotor nach Anspruch 1, **dadurch gekennzeichnet, dass** der Dreheraufsatz (38) mit der Ausgabewelle (26) des Reduktionsmechanismus (20) verbunden ist und der Elektromotor (10) innerhalb einer Halteabschnittsummantelung (32) des elektrischen Schraubendrehers fixiert und platziert ist, damit durch den Dehnmessstreifen, der an dem Muffenkörper befestigt ist, ein Schraubenanzugsmoment in einer Schraubenanzugstätigkeit detektiert wird.

4. Vorrichtung zum Detektieren eines Schraubenanzugsmoments auf einem elektrischen Schraubendreher nach Anspruch 3, **dadurch gekennzeichnet, dass** der Dreheraufsatz über einen Kupplungsmechanismus (34) oder einen Drehmomentbegrenzer mit der Ausgabewelle (26) des Reduktionsmechanismus (20) verbunden ist.

## Revendications

1. Dispositif pour détecter un couple de charge sur un moteur électrique, incluant un corps de manchon (16) entourant un arbre de sortie d'entraînement (14) du moteur électrique (10), l'arbre de sortie d'entraînement (14) dépassant d'une extrémité d'un logement de moteur du moteur électrique (10), dans lequel ledit dispositif présente une structure intégrée dans laquelle un flasque (18) est formé au niveau d'une extrémité du corps de manchon et l'autre extrémité dudit corps de manchon est formée comme section d'engrenage interne (22) d'un mécanisme de réduction (20) comportant des trains planétaires (21), dans lequel une jauge de contrainte (24) est agencée pour être attachée à la périphérie extérieure dudit corps de manchon, et dans lequel l'arbre de sortie d'entraînement (14) dudit moteur électrique (10) est configuré pour s'emboîter avec les trains planétaires (21) du mécanisme de réduction (20) incluant ladite section d'engrenage interne (22) de telle sorte qu'une force d'entraînement rotative est transmise à un arbre de sortie (26), le mécanisme de réduction (20) étant composé des trains planétaires (21) étant reliés audit arbre d'entraînement (26), le dispositif est configuré de telle sorte qu'un couple de charge agissant sur l'arbre de sortie d'entraînement (14) du moteur électrique (10) via ledit arbre de sortie (26) et ledit mécanisme de réduction (20) agit comme moment de torsion sur le corps de manchon (16) constituant la section d'engrenage interne (22) dudit mécanisme de réduction (20) et peut être détecté par la jauge de contrainte (24), **caractérisé en ce que** le dispositif est configuré de telle sorte que le flasque (18) est fixé à la une extrémité dudit logement de moteur.

2. Dispositif pour détecter un couple de charge sur un moteur électrique, selon la revendication 1, **caractérisé en ce que** ledit moteur électrique est fixé à un carter externe (12), qui est une section de maintien spécifique ou une section stationnaire.

3. Dispositif pour détecter un couple de serrage de vis sur un tournevis électrique, comprenant un dispositif pour détecter un couple de charge sur un moteur électrique selon la revendication 1, **caractérisé en ce qu'**un foret de mandrin (38) est relié à l'arbre de sortie (26) dudit mécanisme de réduction (20), et ledit moteur électrique (10) est fixé et placé dans un carter de section de maintien (32) du tournevis électrique, de manière à détecter par la jauge de contrainte attachée audit corps de manchon un couple de serrage de vis lors d'une tâche de serrage de vis.

4. Dispositif pour détecter un couple de serrage de vis sur un tournevis électrique, selon la revendication 3, **caractérisé en ce que** le foret de mandrin est relié à l'arbre de sortie (26) dudit mécanisme de réduction (20) via un mécanisme d'embrayage (34) ou un limiteur de couple.
